# EUROPÄISCHE PATENTSCHRIFT

(11) **EP 0 923 859 B1**
(45) Veröffentlichungstag und Bekanntmachung des Hinweises auf die Patenterteilung: **06.03.2002**
(21) Anmeldenummer: 98123732.4
(22) Anmeldetag: 14.12.1998
(51) Int. Cl.: A01K 3/00

(54) **Elektrisches Weidezaun-Netz**
Electrified fencing net
Réseau à clôture électrifiée

(30) Priorität: 16.12.1997 DE 29722161 U
(43) Veröffentlichungstag der Anmeldung: 23.06.1999
(73) Patentinhaber: horizont gerätewerk GmbH, 34497 Korbach (DE)
(72) Erfinder: Weinreich, Wilhelm, 34497 Korbach (DE); Müller, Robert Dipl.-Ing., 34497 Korbach (DE)
(74) Vertreter: Fuchs Mehler Weiss & Fritzsche

(56) Entgegenhaltungen:
- WO-A-95/01720
- DE-U- 8 808 525
- FR-A- 2 730 605
- US-A- 4 493 480
- US-A- 6 173 942
- UPLAND: "EURO NETZ ELEKTROZAUN" November 1997 , UPLAND , DE XP002096398
- 'FILETS ELECTRIFIES COPARC', COPELEVAGE
- 'QUALITÄTS BÄNDER', AGRAR

## Beschreibung

Die Erfindung bezieht sich auf ein elektrisches Weidezaun-Netz, bestehend aus zaunhoch netzartig miteinander verknüpften betrieblich vorzugsweise horizontal und vertikal verlaufenden Strängen mit horizontalen und vertikalen Leiter-Strängen, die entweder aus einem nichtleitenden Material bestehen und mit einem elektrischen Leiter versehen sind oder die unmittelbar als elektrischer Leiter ausgebildet sind, der jeweils an die spannungsführende Klemme eines Weidezaungerätes anschließbar ist.

Derartige netzartige Weidezäune finden, mit unterschiedlichen Gitterweiten, vorzugsweise zum Hüten von Schafen, Hühnern, Hasen, Schweinen und anderen Kleintieren, Anwendung.

Bei dem Stand der Technik werden sämtliche horizontale Stränge, ggf. mit Ausnahme des betrieblich untersten Stranges, mit einem elektrischen Leiter versehen, insbesondere verdrillt, bzw. sind als solche direkt ausgebildet, wobei die einzelnen Leiter, parallel geschaltet, mit der spannungsführenden Klemme eines Weidezaungerätes verbindbar sind. Um eine besonders wirksame Erdung zu haben, ist es dabei auch bekannt, den betrieblich untersten Strang mit einem elektrischen Leiter zu verdrillen, der als Erdleiter dient.

Problematisch bei dieser Ausbildung gemäß dem Stand der Technik ist, daß bei starkem Bewuchs oder bei einer hohen Schneedecke die Spannung in dem Weidezaun stark absinkt. So ist es keine Seltenheit, daß Spannungsimpulse von beispielsweise 9000V durch den Bewuchs oder die elektrische Leitung über die Schneedecke nur noch als Spannungsimpuls mit 3500V an Ort und Stelle für eine Hütewirkung zu Verfügung stehen.

Ein Weidezaun-Netz mit den eingangs erwähnten Merkmalen ist bekannt geworden aus der WO-95/01720. Bei diesem Weidezaun-Netz sind jedoch sämtliche horizontal und vertikal verlaufende, netzartig miteinander verknüpfte Stränge als elektrische Leiter ausgebildet. Die vertikalen Stränge sind dabei an jedem Kreuzungspunkt mit den horizontalen Strängen elektrisch miteinander verbunden, um das gewünschte Gitternetz für das Weidezaun-Netz zu bilden. Bei dem bekannten Weidezaun-Netz soll der unterste horizontale Leiterstrang eine ausreichende Höhe über Grund und/oder derartigen Vegetation haben. Vor dem Hintergrund, daß die Vegetation nicht still steht und im Winter noch Schnee hinzukommen kann, müßte das bekannte Weidezaun-Netz einen so großen Abstand zum Grund haben, daß kleine Tiere wie Hasen, Hühner und dergleichen hindurchschlüpfen könnten. Da dies jedoch wegen des Verlustes der gewünschten Hütewirkung nicht realisierbar ist, kommt es im bekannten Fall bei starkem Bewuchs und/oder einer hohen Schneedecke zu Ableitungen von elektrischer Energie in die Erde, was als nachteilig empfunden wird.

Im übrigen aus einem Prospekt Upland: "EURO-Netz Elektrozaun", DE-XP 002096398 ein weiteres Weidezaun-Netz bekannt, bei welchem die Bodenlitze, die dem Boden zugewandte Litze nicht stromführend sein soll. Das Ziel dieser Maßnahme ist dem Prospekt jedoch nicht zu entnehmen.

Vor diesem Hintergrund ist es die Aufgabe der vorliegenden Erfindung, das eingangs bezeichnete elektrische Weidezaun-Netz so auszubilden, daß die Ableitungen von elektrischer Energie in die Erde möglichst verhindert wird.

Die Lösung dieser Aufgabe erfolgt gemäß der Erfindung dadurch, daß nur wenige der horizontalen Stränge als Strang-Leiter mit relativ hoher Leitfähigkeit und die anderen horizontalen Stränge als Nichtleiter-Stränge ausgebildet sind, wobei an die horizontalen Leiter-Stränge in vorgegebenen Abständen jeweils die vertikalen Leiter-Stränge stichleitungsartig mit Einhalten eines ausreichenden Abstandes vom Boden zwecks Aufrechterhaltung der Isolation angeschlossen sind.

Durch die ringleitungs- oder sammelschienenartig an die spannungsführende Klemme des Weidezaungerätes anschließbaren horizontalen Leiter-Strängen mit der relativ hohen Leitfähigkeit ist praktisch kein merklicher Spannungsverlust über die Zaunlänge gegeben, d. h. das Potential ist an den Punkten, an denen jeweils die stichleitungsartigen Leiter-Stränge angeschlossen sind, im wesentlichen gleich. Da die Länge der stichleitungsartig angeschlossenen Leiter-Stränge, bedingt durch die verhältnismäßig geringe Zaunhöhe, im Vergleich zur Zaunlänge, relativ kurz ist, macht sich eine etwaige geringere Leitfähigkeit wiederum praktisch nicht bemerkbar, da der Spannungsabfall nur gering ist.

Durch die EP 0 610 490 ist ein elektrischer Weidezaun, bestehend aus einem Netzwerk von nichtleitenden Strängen, bekannt geworden, die auf verhältnismäßig komplexe Weise miteinander verknüpft sind. Dieses Netzwerk wird wellenartig von mindestens zwei um 180° phasenverschobenen elektrischen Leitern hoher Leitfähigkeit durchzogen. Dieses bekannte Netzwerk hat einen komplexen Aufbau, was seine Herstellung verteuert und zum anderen ist die Verteilung der spannungsführenden Leiter nicht optimal.

Eine besonders kostengünstige, weil einfache Ausbildung, ist gemäß einer Weiterbildung der Erfindung erzielbar, wenn nur der betrieblich erdabgewandteste horizontale Strang als Leiter-Strang mit hoher Leitfähigkeit ausgebildet ist, und die stichleitungsartigen Leiter-Stränge sich im wesentlichen über die Zaunhöhe erstrecken, mit einem ausreichenden Abstand zum Boden zur Aufrechterhaltung der Isolation.

Es ist alternativ auch denkbar, daß gemäß einer anderen Ausgestaltung der Erfindung nur ein mittlerer horizontaler Strang als Leiter-Strang mit hoher Leitfähigkeit ausgebildet ist und die stichleitungsartigen Leiter-Stränge sich sowohl erdzugewandt als auch erdabgewandt erstrecken.

Beide Alternativen benötigen nur einen einzigen teuren Leiter, der vorzugsweise ringleitungs- oder sammelschienenartig sich über die gesamte Zaunlänge erstreckt; sie sind daher sehr kostengünstig.

Grundsätzlich kann, je nach Anwendungsfall, auch mehr als nur ein horizontaler Leiter-Strang mit relativ hoher Leitfähigkeit vorgesehen sein. So ist es gemäß einer weiteren Ausgestaltung der Erfindung denkbar, daß zwei beabstandete horizontale Stränge jeweils als Leiter-Stränge mit hoher Leitfähigkeit ausgebildet sind, und die stichleitungsartigen Leiter-Stränge, mit beiden horizontalen Leitern-Strängen verbunden, sich im wesentlichen über die Zaunhöhe erstrecken, unter Aufrechterhaltung der Isolation durch einen ausreichende Abstand zum Boden.

Eine derartige Ausbildung erlaubt es insbesondere, für die stichleitungsartigen Leiter-Stränge solche mit einem relativ hohen spezifischen Widerstand zu verwenden.

Um eine wirksame Erdung vorzusehen, ist gemäß einer Weiterbildung der Erfindung das Weidezaunnetz so ausgebildet, daß zusätzlich der betrieblich erdzugewandte horizontale Strang als Leiter-Strang mit hoher Leitfähigkeit ausgebildet ist, der ringleitungsartig mit Erde verbindbar ist.

Besonders wirksam in der Fläche ist dabei die Erdung, wenn gemäß einer weiteren Ausgestaltung der Erfindung an dem erdbaren horizontalen Leiter-Strang in vorgegebenen Abständen vertikale Leiter-Stränge stichleitungsartig angeschlossen sind, die zwischen den vertikalen spannungsführenden Stichleiter-Strängen liegen, und die ebenfalls eine geringere Leitfähigkeit aufweisen.

Besonders vorteilhaft ist eine Ausführungsform, bei der die vertikalen Leiterstränge eine deutlich geringere Leitfähigkeit als die horizontalen Leiterstränge aufweisen. Hintergrund hierfür ist, daß Leiter mit einer hohen Leitfähigkeit in der Größenordnung von 0,1 Ohm/m, die vorzugsweise in Form von Litzen zur Anwendung kommen, verhältnismäßig teuer gegenüber Leitern mit geringeren Leitfähigkeiten, bis hin zu dem Faktor 10, sind. Bei dem heutigen, durch den internationalen Wettbewerb verursachten Kostendruck ist dies ein beachtlicher Kostenfaktor.

Eine geringere Leitfähigkeit der vertikalen Leiterstränge macht sich jedoch nicht nur kostenmäßig mit Vorteil bemerkbar. Sie bewirkt bei Bewuchs oder auch bei Berührung mit einer Schneedecke auch eine noch geringere Energieableitung in den Boden.

Vorzugsweise, weil besonders preisgünstig und dennoch voll wirksam, ist es, wenn gemäß einer Ausgestaltung der Erfindung der spezifische Widerstand der horizontalen Leiter-Stränge im Bereich von 0,1 - 0,5 Ohm/m und der spezifische Widerstand der vertikalen stichleitungsartigen Leiter-Stränge im Bereich von 1 - 50 Ohm/m liegt.

Es wird jedoch ausdrücklich hervorgehoben, daß die der Erfindung zugrundeliegende Aufgabe auch mit einem netzartigen Weidezaun gelöst wird, bei dem zwischen den Leitfähigkeiten des oder der horizontalen Leiter und der vertikalen Stichleitungen keine oder nur geringe Unterschiede bestehen.

Weitere ausgestaltende Merkmale und Vorteile der Erfindung ergeben sich anhand der Beschreibung von in den Zeichnungen dargestellten Ausführungsbeispielen.

Es zeigen:
- Fig. 1: eine Ausführungsform des erfindungsgemäßen Weidezaun-Netzes, bei dem der oberste horizontale Strang mit einem Leiter hoher Leitfähigkeit verdrillt ist, der als Ring- oder Sammelleitung für abgehende Stichleitungen dient,
- Fig. 2: eine Ausführungsform nach Fig. 1 mit einer zusätzlichen Erd-Sammelleitung,
- Fig. 3: eine Ausführung nach Fig. 2, bei der zusätzlich von der Erd-Ringleitung Stichleitungen ausgehen, die kammartig mit den spannungsführenden Stichleitungen ineinandergreifen,
- Fig. 4: eine Ausführungsform, bei dem mittlere horizontale Stränge mit dem Leiter hoher Leitfähigkeit verdrillt sind, von der nach beiden Seiten vertikale Stichleitungen abgehen, und
- Fig. 5: eine weitere Variante mit zwei beabstandeten, inneren Sammelleitungen, die beide mit vertikalen Stichleitungen verknüpft sind.

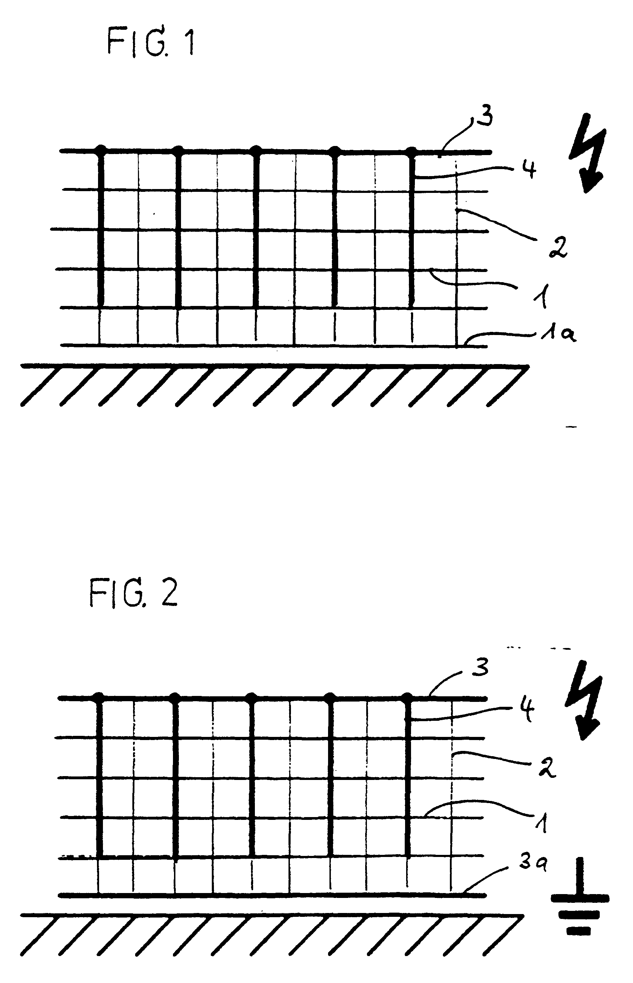

Die Fig. 1 zeigt in einer schematischen Darstellung einen Ausschnitt aus einem elektrischen Weidezaun-Netz bestehend aus gitternetzartig miteinander verknüpften nicht leitenden Strängen 1, 2, die vorzugsweise aus Kunststoff bestehen. Betrieblich, wie dargestellt, verlaufen die Stränge 1 horizontal und die Stränge 2 vertikal, wobei der einfacheren Darstellung halber in Fig. 1 nur jeweils ein Strang mit einem Bezugszeichen versehen ist.

Zur Versteifung des Weidezaun-Netzes sind die vertikalen Stränge, vorzugsweise zumindest ein Teil davon, als steife Kunststoffstränge ausgebildet. Die horizontalen Stränge sind vorzugsweise aus Kunststoffäden hergestellt, die zusammen mit einem flexiblen Leiter, miteinander litzenartig verdrillt sind. Auch die vertikalen Stränge können aus einer derartigen Litze bestehen. Die horizontalen wie die vertikalen Stränge, die elektrisch leitend ausgebildet sind, können auch aus einem metallischen Draht bzw. Band oder einer Draht- oder Bandlitze bestehen.

Bei der Ausführungsform nach Fig. 1 ist nur der betrieblich oberste, d.h. erdabgewandteste horizontale Strang, mit einem ringleitungs- oder sammelschienenartig an die spannungsführende Klemme eines Weidezaungerätes anschließbaren elektrischen Leiter 3 hoher Leitfähigkeit verdrillt. An diesen Leiter 3 sind in bestimmten Abständen, in Fig. 1 bei jedem zweiten vertikalen Strang, weitere elektrische Leiter 4 stichleitungsartig angebracht, die gegenüber dem Leiter 3 eine deutlich verringerte Leitfähigkeit aufweisen. Diese elektrischen Leiter 4 sind vorzugsweise mit den vertikalen Strängen 2 verdrillt und erstrecken sich im wesentlichen über die Zaunhone, mit Ausnahme des untersten horizontalen Stranges 1 a, der für den in Fig. 2 dargestellten Erdleiter 3 a sozusagen freigehalten ist. Bei einem steifen vertikalen Strang ist dieser mit dem Leiter umwickelt. Zur Aufrechterhaltung der Isolation ist daher hinsichtlich der Erstreckung der vertikalen Leiter-Stränge ein ausreichender Abstand zum Boden einzuhalten.

Durch den ringleitungsartig an die spannungsführende Klemme anschließbare Leiter 3 mit der hohen Leitfähigkeit ist praktisch kein beachtlicher Spannungsverlust über die Zaunlänge gegeben, d.h. das Potential ist an den Punkten, an denen jeweils die stichleitungsartigen Leiter 4 angeschlossen sind, im wesentlichen gleich. Da die Länge der stichleitungsartig angeschlossenen Leiter 4, bedingt durch die verhältnismäßig geringe Zaunhöhe im Vergleich zur Zaunlänge, relativ kurz ist, macht sich die geringere Leitfähigkeit wiederum praktisch nicht bemerkbar, da der Spannungsabfall nur gering ist. Auch bewirkt die geringere Leitfähigkeit bei Bewuchs eine geringere Energieableitung in den Boden.

Die Fig. 2 zeigt einen Weidezaun entsprechend Fig. 1, bei dem jedoch zusätzlich der betrieblich erdzugewandte horizontale Strang 1 a mit einem elektrischen Leiter 3a hoher Leitfähigkeit verdrillt ist, der ringleitungsartig mit Erde verbindbar ist. Dadurch ist eine besonders wirksame Erdung gegeben.

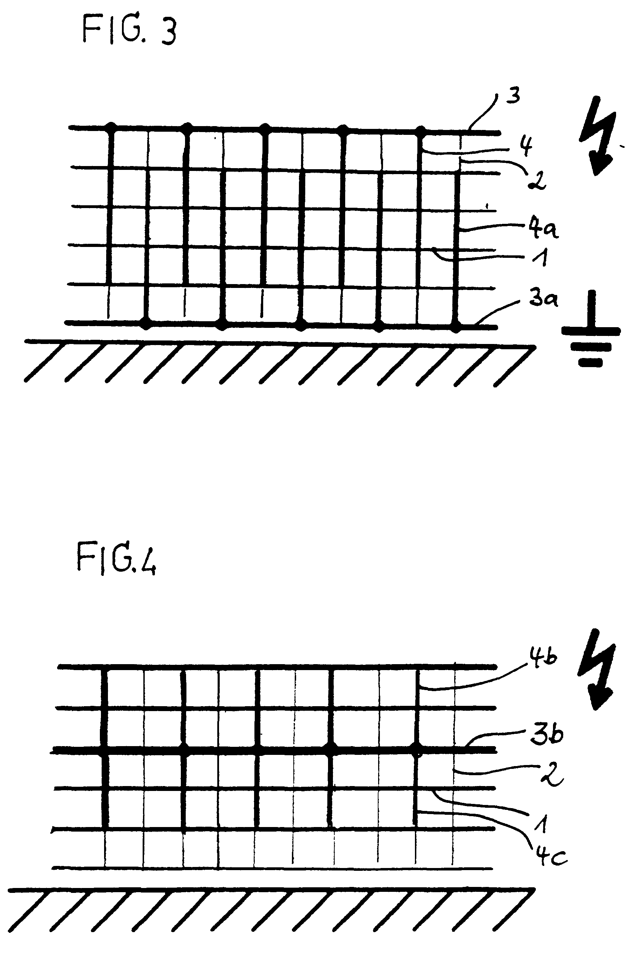

Die Fig. 3 zeigt eine Ausführungsform eines erfindungsgemäßen Weidezaun-Netzes entsprechend der Fig. 2, bei der jedoch zusätzlich an den ringleitungsartigen Erdleiter 3 a in vorgegebenen Abständen weitere elektrische Leiter 4 a stichleitungsartig angeschlossen sind, die ebenfalls mit vertikalen Strängen 2 verdrillt sind, und die kammartig verzahnt zwischen den vertikalen Strängen liegen, die mit den spannungsführenden Stichleitern 4 verdrillt sind, wobei die Leiter 4 a ebenfalls eine geringere Leitfähigkeit als der Erdleiter aufweisen.

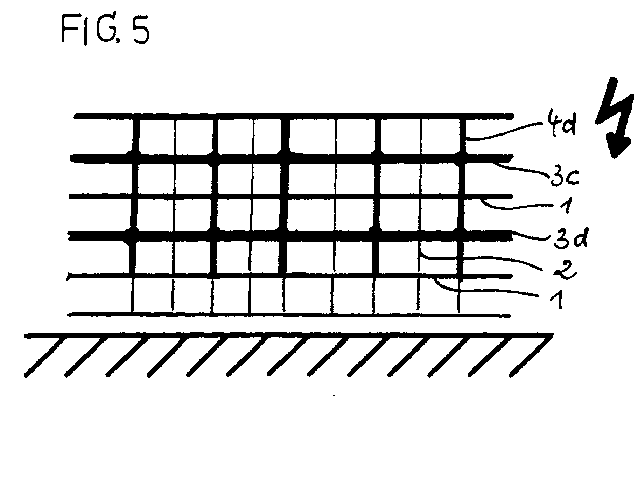

Die Fig. 4 zeigt eine Ausführungsform eines Weidezaun-Netzes, bei der nur der mittlere horizontale Strang mit dem elektrischen Leiter 3 b hoher Leitfähigkeit verdrillt ist, wobei die daran angeschlossenen stichleitungsartigen Leiter 4 b und 4 c sich sowohl erdzugewandt als auch erdabgewandt erstrecken. Bei dieser Ausführungsform nach der Fig. 4 ist der Spannungsabfall über die stichleitungsartigen Leiter 4 b und 4 c kleiner als im Fall der Ausführungsform nach den Fig. 1 bis 3, bzw. es wäre denkbar, für die stichleitungsartigen Leiter 4 b und 4 c einen Leiter mit noch geringerer Leitfähigkeit zu verwenden.

Auch bei der Ausführungsform nach der Fig. 4 ist eine wirksame Erdung mit einem zusätzlichen Erdleiter entsprechend Fig. 2 denkbar.

Die Fig. 5 zeigt eine Ausführungsform eines Weidezaun-Netzes, bei der zwei beabstandete horizontale Stränge 1 mit einem elektrischen Leiter 3 c und 3 d mit hoher Leitfähigkeit verdrillt sind, wobei die stichleitungsartigen Leiter 4 d mit beiden horizontalen Leitern 3 c und 3 d verbunden sind und sich im wesentlichen über die Zaunhöhe erstrecken. Auch bei dieser Ausführungsform nach Fig. 5 kann der unterste Strang mit einem Erdleiter entsprechend Fig. 2 versehen sein. Die Ausbildung nach Fig. 5 ermöglicht es insbesondere, für die stichleitungsartigen Leiter 4 d solche mit einem relativ hohen spezifischen Widerstand zu verwenden.

## Patentansprüche

1. Weidezaun-Netz für einen elektrischen Weidezaun, bestehend aus zaunhoch netzartig miteinander verknüpften, betrieblich vorzugsweise horizontal und vertikal verlaufenden Strängen (1, 2), mit horizontalen und vertikalen Leitungs-Strängen (3, 4), die entweder aus einem nicht-leitenden Material bestehen und mit einem elektrischen Leiter versehen sind, oder die unmittelbar als elektrischer Leiter ausgebildet sind, der jeweils an die spannungsführende Klemme eines Weidezaungerätes anschließbar ist,
**dadurch gekennzeichnet,**
**daß** nur wenige der horizontalen Stränge (1) als Strang-Leiter (3, 3b, 3c, 3d) mit relativ hoher Leitfähigkeit und die anderen horizontalen Stränge als Nichtleiter-Stränge ausgebildet sind, wobei an die horizontalen Leiter-Stränge in vorgegebenen Abständen jeweils die vertikalen Leiter-Stränge (4, 4b, 4c, 4d) stichleitungsartig mit Einhalten eines ausreichenden Abstandes zum Boden zwecks Aufrechterhaltung der Isolation angeschlossen sind.

2. Weidezaun-Netz nach Anspruch 1, **dadurch gekennzeichnet, daß** nur der betrieblich erdabgewandteste, horizontale Strang (1) als Leiter-Strang (3) mit hoher Leitfähigkeit ausgebildet ist, und die stichleitungsartigen Leiter-Stränge (4) sich im wesentlichen über die Zaunhöhe erstrecken, mit Einhalten eines ausreichenden Abstandes zum Boden zwecks Aufrechterhaltung der Isolation.

3. Weidezaun-Netz nach Anspruch 1, **dadurch gekennzeichnet, daß** nur ein mittlerer horizontaler Strang als Leiter-Strang (3b) mit hoher Leitfähigkeit ausgebildet ist und die stichleitungsartigen Leiter-Stränge (4b, 4c) sich sowohl erdzugewandt als auch erdabgewandt erstrecken.

4. Weidezaun-Netz nach Anspruch 1, **dadurch gekennzeichnet, daß** zwei beabstandete horizontale Stränge (1) jeweils als Leiter-Stränge (3c, 3d) mit hoher Leitfähigkeit ausgebildet sind, und die stichleitungsartigen Leiter-Stränge (4d), mit beiden horizontalen Leiter-Strängen (3c, 3d) verbunden, sich im wesentlichen über die Zaunhöhe erstrecken, mit Einhalten eines ausreichenden Abstandes zum Bodes.

5. Weidezaun-Netz nach einem der Ansprüche 1 bis 4, **dadurch gekennzeichnet, daß** zusätzlich ein betrieblich erdzugewandter horizontaler Strang (1) als Leiter-Strang (3a) mit hoher Leitfähigkeit ausgebildet ist, der mit Erde verbindbar ist.

6. Weidezaun-Netz nach Anspruch 5, **dadurch gekennzeichnet, daß** an dem erdbaren Leiter-Strang (3a) in vorgegebenen Abständen vertikale Leiter-Stränge (4a) stichleitungsartig angeschlossen sind, die zwischen den vertikalen spannungsführenden Stichleiter-Strängen (4) liegen, und die ebenfalls eine geringere Leitfähigkeit aufweisen.

7. Weidezaun-Netz nach einem der Ansprüche 1 bis 6, **dadurch gekennzeichnet, daß** die vertikalen Leiter-Stränge (4,4a,4b,4c,4d) eine deutlich geringere Leitfähigkeit als die horizontalen Leiter-Stränge aufweisen.

8. Weidezaun-Netz nach einem der Ansprüche 1 bis 7, **dadurch gekennzeichnet, daß** der spezifische Widerstand der horizontalen Leiter-Stränge (3, 3a, 3b, 3c, 3d) im Bereich von 0,1 - 0,5 Ohm/m und der spezifische Widerstand der vertikalen stichleitungsartigen Leiter-Stränge (4, 4a, 4b, 4c, 4d) im Bereich von 1 - 50 Ohm/m liegt.

## Claims

1. Fence network for an electric fence, comprising branches (1, 2) preferably running horizontally and vertically in operation and linked to one another like a net at fence height, having horizontal and vertical conductor branches (3, 4), which consist either of a non-conductive material and are provided with an electrical conductor, or which are designed directly as an electrical conductor, which can be connected in each case to the voltage-carrying terminal of a fence device, **characterised in that** only a few of the horizontal branches (1, 2) are designed as branch conductors (3, 3b, 3c, 3d) having relatively high conductivity and the other horizontal branches are designed as non-conductor branches, wherein in each case the vertical conductor branches (4, 4b, 4c, 4d) are connected to the horizontal conductor branches at preset intervals like a stub cable while keeping an adequate distance from earth for the purpose of maintaining insulation.

2. Fence network according to claim 1, **characterised in that** only the horizontal branch (1) facing furthest away from earth in operation is designed as a conductor branch (3) having high conductivity, and the stub cable-like conductor branches (4) extend essentially over the fence height, while keeping an adequate distance from earth for the purpose of maintaining insulation.

3. Fence network according to claim 1, **characterised in that** only one central horizontal branch is designed as a conductor branch (3b) having high conductivity and the stub cable-like conductor branches (4b, 4c) extend both facing earth and facing away from earth.

4. Fence network according to claim 1, **characterised in that** two spaced horizontal branches (1) are designed in each case as conductor branches (3c, 3d) having high conductivity, and the stub cable-like conductor branches (4d), connected to both horizontal conductor branches (3c, 3d), extend essentially over the fence height, while keeping an adequate distance from earth.

5. Fence network according to one of claims 1 to 4, **characterised in that** additionally, a horizontal branch (1) facing earth in operation is designed as a conductor branch (3a) having high conductivity, which can be connected to earth.

6. Fence network according to claim 5, **characterised in that** vertical conductor branches (4a) are connected like a stub cable to the earthable conductor branch (3a) at preset intervals and lie between the vertical voltage-carrying stub-cable branches (4), and likewise have a lower conductivity.

7. Fence network according to one of claims 1 to 6, **characterised in that** the vertical conductor branches (4, 4a, 4b, 4c, 4d) have a clearly lower conductivity than the horizontal conductor branches.

8. Fence network according to one of claims 1 to 7, **characterised in that** the specific resistance of the horizontal conductor branches (3, 3a, 3b, 3c, 3d) lies in the range from 0.1 - 0.5 Ohm/m and the specific resistance of the vertical stub cable-like conductor branches (4, 4a, 4b, 4c, 4d) lies in the range from 1 - 50 Ohm/m.

## Revendications

1. Réseau de clôture électrifiée pour une clôture électrifiée, comprenant des faisceaux (1, 2) joints sous forme de réseau à hauteur ce clôture, disposés de préférence de manière horizontale et verticale pour des raisons de service, comprenant des faisceaux conducteurs disposés à l'horizontale et à la verticale (3, 4), composés soit d'un matériau non conducteur et équipés d'un conducteur électrique, soit configurés directement sous forme de conducteur électrique, lequel peut se connecter sur la borne sous tension d'un appareil d'électrification de clôture
**caractérisé par le fait que** :
seuls peu de faisceaux horizontaux (1) sont configurés en faisceaux conducteurs (3, 3b, 3c, 3d) présentant une conductivité relativement élevée, tandis que les autres faisceaux horizontaux sont constitués en faisceaux non conducteurs, étant précisé que sur les faisceaux horizontaux, à des intervalles prédéfinis, les faisceaux conducteurs verticaux (4, 4b, 4c, 4d) sont connectés sous forme de dérivation, en ménageant une distance suffisante par rapport au sol en vue de préserver l'isolation.

2. Réseau de clôture électrifiée conformément à la revendication 1, **caractérisé par le fait que** seul le faisceau horizontal disposé, pour des raisons de service, le plus loin de la terre (1), est configuré en faisceau conducteur (3) présentant une conductivité élevée, et que les faisceaux conducteurs configurés en dérivation (4) sont disposés pratiquement sur toute la hauteur de la clôture, tout en ménageant une distance suffisante par rapport au sol en vue de préserver l'isolation.

3. Réseau de clôture électrifiée conformément à la revendication 1, **caractérisé par le fait que** seul un faisceau horizontal situé au milieu est configuré en faisceau conducteur (3b) présentant une conductivité élevée, et
que les faisceaux conducteurs configurés en dérivation (4b, 4c) s'étendent tant en direction du sol qu'en s'éloignant du sol.

4. Réseau de clôture électrifiée conformément à la revendication 1, **caractérisé par le fait que** deux faisceaux horizontaux se trouvant à une certaine distance l'un de l'autre (1) sont configurés en faisceaux conducteurs (3c, 3d) présentant une conductivité élevée, et que les faisceaux configurés en dérivation (4d) sont connectés aux deux faisceaux conducteurs horizontaux (3c, 3d) en s'étendant sur pratiquement toute la hauteur de la clôture, tout en ménageant une distance suffisante par rapport au sol.

5. Réseau de clôture électrifiée conformément à l'une des revendications 1 à 4, **caractérisé par le fait qu'**en plus, un faisceau conducteur horizontal, disposé près de la terre pour des raisons de service (1), est configuré en faisceau conducteur (3a) présentant une conductivité élevée, lequel peut être mis à la terre.

6. Réseau de clôture électrifiée conformément à la revendication 5, **caractérisé par le fait que** sur le faisceau conducteur susceptible d'être mis à la terre (3a) sont connectés des faisceaux conducteurs verticaux (4a) configurés en dérivation à intervalles prédéfinis, lesquels sont disposés entre les faisceaux conducteurs verticaux sous tension configurés en dérivation (4), et présentent également une faible conductivité.

7. Réseau de clôture électrifiée conformément à l'une des revendications 1 à 6, **caractérisé par le fait que** les faisceaux conducteurs verticaux (4, 4a, 4b, 4c, 4d) présentent une conductivité sensiblement plus faible que les faisceaux conducteurs horizontaux.

8. Réseau de clôture électrifiée conformément à l'une des revendications 1 à 7, **caractérisé par le fait que** la résistance spécifique des faisceaux conducteurs horizontaux (3, 3a, 3b, 3c, 3d) se situe à l'intérieur d'une plage de 0,1 à 0,5 ohm/m, tandis que la résistance spécifique des faisceaux conducteurs verticaux (4, 4a, 4b, 4c, 4d) se situe à l'intérieur d'une plage de 1 à 50 ohms/m.
